# EUROPÄISCHE PATENTSCHRIFT

(11) **EP 3 523 857 B1**
(45) Veröffentlichungstag und Bekanntmachung des Hinweises auf die Patenterteilung: **22.04.2020**
(21) Anmeldenummer: 17780385.5
(22) Anmeldetag: 05.10.2017
(51) Int. Cl.: H01R 11/12, H01R 11/26, F16B 37/06, H01R 4/30, F16B 41/00

(54) **VERFAHREN ZUR HERSTLELLUNG EINER MIT EINEM KABELSCHUH DREHVERBUNDENEN MUTTER UND MIT EINEM KABELSCHUH DREHVERBUNDENE MUTTER**
METHOD FOR PRODUCING A NUT WHICH IS ROTATIONALLY CONNECTED TO A CABLE SHOE, AND NUT WHICH IS ROTATIONALLY CONNECTED TO A CABLE SHOE
PROCÉDÉ DE FABRICATION D'UN ÉCROU RELIÉ À ROTATION À UNE COSSE DE CÂBLE ET ÉCROU RELIÉ À ROTATION À UNE COSSE DE CÂBLE

(30) Priorität: 07.10.2016 DE 102016119053
(43) Veröffentlichungstag der Anmeldung: 14.08.2019
(73) Patentinhaber: Gustav Klauke GmbH, 42855 Remscheid (DE)
(72) Erfinder: BÜRGER, Bernd, 42897 Remscheid (DE)
(74) Vertreter: Müller, Enno
(86) Internationale Anmeldenummer: PCT/EP2017/075276
(87) Internationale Veröffentlichungsnummer: WO 2018/065503

(56) Entgegenhaltungen:
- DE-A1- 10 243 759

## Beschreibung

### Gebiet der Technik

Die Erfindung betrifft zunächst ein Verfahren zur Herstellung einer mit einem Flachteil-Verbindungsabschnitt eines Kabelschuhs frei drehbar verbundenen Mutter, wobei der Flachteil-Verbindungsabschnitt eine Durchgangsöffnung aufweist, die Mutter eine im Verbindungszustand untere Sitzfläche aufweist und sich an der Mutter von der Sitzfläche weiter nach unten ein Halterungsabschnitt erstreckt, wobei eine Verjüngung der Durchgangsöffnung durch einen in die Durchgangsöffnung durch Umformung vorgewölbten Halterungs-Materialabschnitt ausgebildet wird und der Halterungs-Materialabschnitt durch eine in dem Flachteil-Verbindungsabschnitt umgebend zu der Durchgangsöffnung auf einer der Sitzfläche zugeordneten Oberseite des Flachteil-Verbindungsabschnittes vorgenommene Einsenkung erzeugt wird.

Weiter betrifft die Erfindung eine an einem Flachteil-Verbindungsabschnitt eines Kabelschuhs frei drehbar angebrachte Mutter, wobei der Flachteil-Verbindungsabschnitt eine Durchgangsöffnung aufweist, die Mutter eine im Verbindungszustand untere Sitzfläche aufweist und sich von der Sitzfläche weiter nach unten ein Halterungsabschnitt erstreckt, wobei in dem Flachteil-Verbindungsabschnitt umgebend zu der Durchgangsöffnung auf einer der Sitzfläche der Mutter zugeordneten Oberseite eine Einsenkung ausgebildet ist und eine Verjüngung der Durchgangsöffnung durch einen in die Durchgangsöffnung vorgewölbten Halterungs-Materialabschnitt gegeben ist, wobei der Halterungsabschnitt einen durch den Halterungs-Materialabschnitt gebildeten engsten Querschnitt der Durchgangsöffnung nach unten überragt.

### Stand der Technik

Zum Stand der Technik ist zunächst auf die WO 2006/042812 A1 (US 2009/0162135 A1) zu verweisen. Bei dem hieraus bekannten Verfahren ist der Halterungsabschnitt der Mutter, bereits bevor die Mutter auf die Oberseite des Flachteil-Verbindungsabschnittes aufgesetzt wird, mit einem Hinterschnitt ausgebildet, in welchen sich dann zugleich durch ein unter Presskraft erfolgendes Aufsetzen der Mutter die Ausbildung des Halterungs-Materialabschnittes in den Hinterschnitt des Halterungsabschnittes vollzieht und damit sogleich die drehbare, verlierungssichere Halterung der Mutter an dem Kabelschuh erreicht ist. Dieses an sich vorteilhafte Verfahren kann sich aber hinsichtlich der erforderlichen besonderen Ausgestaltung der Mutter mit dem Hinterschnitt in dem Halterungsabschnitt als kostenmäßig aufwendig erweisen. Dies zumindest dann, wenn im Hinblick auf eine bestimmte Größe des Kabelschuhs und/oder der Mutter - nur - geforderte Stückzahlen eine wirtschaftliche Herstellung einer so ausgebildeten Mutter nicht erlauben.

Weiter ist auf die DE 200 01 463 U1 zu verweisen. Hieraus ist es bekannt, den Halterungsabschnitt der Mutter erst im Sinne des genannten Hinterschnittes durch Aufweitung umzuformen, wenn die Mutter auf der Oberseite des Halterungs-Materialabschnittes aufsitzt und sich entsprechend der Halterungsabschnitt in die Durchgangsöffnung erstreckt. Um diese Vorgehensweise zu ermöglichen, ist die Durchgangsöffnung des Flachteil-Verbindungsabschnittes des hieraus bekannten Kabelschuhs in Einsteckrichtung des Halterungsabschnittes ausgehend von einem in Einsteckrichtung zunächst zylinderförmig belassenen Abschnitt sich bis zum Ende kegelförmig erweiternd ausgebildet. Eine derartige Ausformung der Öffnung des Halterungs-Materialabschnittes erweist sich in der Herstellung auch als vergleichsweise teuer. Der vorgesehene Abschrägungswinkel der kegelförmigen Erweiterung führt auch zu einem nicht vernachlässigbaren Flächenverlust auf der Unterseite des Flachteil-Verbindungsabschnittes. Es kann sich eine Beeinträchtigung der leitenden Verbindung zwischen dem Kabelschuh und einem Teil, mit welchem der Kabelschuh zu verbinden ist, ergeben.

Aus der DE 10243759 A1 ist die drehfeste Verbindung eines Befestigungsteils mit einem Blechteil, welches auch der Flachteil-Verbindungsabschnitt eines Kabelschuhs sein kann, bekannt. Hierzu ist an dem Befestigungsteil einerseits ein Stanzkragen ausgebildet und andererseits ein Nietabschnitt, der zur weiteren Aufweitung der durch den Stanzabschnitt geschaffenen Durchgangsöffnung in diese hineingedrückt wird und zugleich nach radial außen verformt wird.

### Zusammenfassung der Erfindung

Ausgehend von dem dargelegten Stand der Technik beschäftigt sich die Erfindung mit der Aufgabenstellung, ein Verfahren zur Herstellung einer mit einem Flachteil-Verbindungsabschnitt eines Kabelschuhes drehverbundenen Mutter anzugeben und auch eine an einem Flachteil-Verbindungsabschnitt eines Kabelschuhs drehbar angebrachte Mutter anzugeben, welches Verfahren herstellungsmäßig, insbesondere im Hinblick auf die Herstellungskosten, günstig durchführbar ist und eine an dem Kabelschuh drehverbundene Mutter anzugeben, die möglichst ohne Einschränkung in der Benutzbarkeit zugleich vorteilhaft herstellbar ist.

Diese Aufgabe ist verfahrensmäßig beim Gegenstand des Anspruches 1 gelöst, wobei darauf abgestellt ist, dass zunächst der Halterungs-Materialabschnitt ausgebildet und die Mutter auf die Oberseite aufgesetzt wird, wobei der Halterungsabschnitt der Mutter einen durch den Halterungs-Materialabschnitt gebildeten engsten Querschnitt der Durchgangsbohrung nach unten überragt, und dass sodann der Halterungsabschnitt unterhalb des engsten Querschnitts aufgeweitet wird, zur frei drehbaren Formschluss-Halterung der Mutter an dem Kabelschuh.

Diese Aufgabe ist weiter beim Gegenstand des Anspruches 2 hinsichtlich der drehverbunden angebrachten Mutter dadurch gelöst, dass der Halterungsabschnitt unterhalb des engsten Querschnittes durch plastische Verformung aufgeweitet ist, zur frei drehbaren Formschluss-Halterung der Mutter an dem Kabelschuh.

Die Ausbildung der Einsenkung kann zunächst in einem gesonderten Arbeitsvorgang vorgenommen werden. Etwa durch Eindrücken eines Stempels mit einer der gewünschten Einsenkung entsprechenden Kontur in die Oberseite des Flachteil-Verbindungsabschnittes. Da derartige Kabelschuhe hinsichtlich der erforderlichen Bearbeitungsschritte, insbesondere der Umform-Verarbeitungsschritte, üblicherweise an einem Drehtisch bearbeitet werden, kann dieser Bearbeitungsschritt günstig in die Taktfolge aufgenommen sein. Er kann sogar in einen auch ansonsten vorzusehenden Arbeitsschritt integriert mit aufgenommen sein.

Im Weiteren kann aber auch die Ausbildung der Einsenkung beispielsweise durch ein Aufpressen der Mutter auf die Oberseite des Halterungs-Verbindungsabschnittes vorgenommen werden, wenn unterseitig, an der Sitzfläche der Mutter bereits eine entsprechende Vorwölbung vorgesehen ist. Hierzu kann die Mutter bezüglich der Sitzfläche derart ausgebildet sein, wie es im Einzelnen in der genannten WO 2006/042812 A1 beschrieben ist. Der Offenbarungsgehalt dieser Druckschrift wird hiermit im Hinblick auf die Ausgestaltung der Mutter an der Sitzfläche vollinhaltlich in die Offenbarung vorliegender Anmeldung mit aufgenommen, auch zum Zwecke, Merkmale der in dieser Druckschrift offenbarten Merkmale in einen Anspruch vorliegender Anmeldung mit aufzunehmen.

Als Sitzfläche der Mutter ist eine Unterseite der Mutter angesprochen, die ausgehend von einer radial äußeren, im aufgesetzten Zustand parallel zu der Oberseite des Flachteil-Verbindungsabschnittes ausgebildeten Fläche nach radial innen gesehen mit der Oberseite des Flachteil-Verbindungsabschnittes in Kontakt ist oder bei insofern durchgehend ebenflächiger Ausbildung der Oberseite des Flachteil-Verbindungsabschnittes und/oder der Unterseite der Mutter mit der Oberseite in Kontakt wäre.

Hinsichtlich der drehverbindenden Mutter kann bei einer Ausgestaltung der Mutter gemäß der genannten WO 2006/042812 A1 insbesondere eine ergänzende radiale Halterung durch die Sitzfläche in dem Flachteil-Verbindungsabschnitt des Kabelschuhs erreicht werden. Bei einer Ausgestaltung mittels einer gesondert ausgebildeten Einsenkung, ohne dass die Sitzfläche der Mutter hierin eingreift, ergibt sich die radiale Halterung im Bereich des Halterungsabschnittes.

Der Flachteil-Verbindungsabschnitt des Kabelschuhs kann in unterschiedlicher Weise gestaltet sein. Zunächst kann der Kabelschuh aus einem Rohr geformt sein, wobei der Flachteil-Verbindungsabschnitt durch ein Flachpressen eines Rohrabschnittes erreicht wird. Entsprechend ergibt sich in dem Flachteil-Verbindungsabschnitt das Aufeinanderliegen von zwei Materiallagen, die, soweit nicht randseitig eine Abstanzung vorgenommen wird, randseitig durch Faltung ineinander übergehen. Hierdurch kann insbesondere gegeben sein, dass die genannte Einsenkung, unabhängig davon, ob sie gesondert hergestellt wird oder durch eine Ausformung der Sitzfläche der Mutter bei einer Pressaufbringung der Mutter auf den Flachteil-Verbindungsabschnitt ausgebildet wird, im Wesentlichen auf die Lage begrenzt ist, welche die der Mutter zugewandte Oberseite des Flachteil-Verbindungsabschnittes bildet.

Der Flachteil-Verbindungsabschnitt kann auch bezüglich eines Querschnittes integral durchgehend gebildet sein, wenn der Kabelschuh insoweit aus einem Vollmaterial geformt ist. Hierbei ergibt sich, dass die Einsenkung und der dadurch ausgebildete Halterungs-Materialabschnitt in der Durchgangsöffnung gleichsam auch tiefer, in Richtung auf die der Sitzfläche der Mutter gegenüberliegende Seite des Flachteil-Verbindungsabschnittes verschoben, ausgebildet sein kann. Diese Ausbildung kann insbesondere dann vorteilhaft sein, wenn die Sitzfläche der Mutter mit einer Gestaltung vorgenommen ist, die bei einem Aufpressen der Mutter auf die Oberseite des Flachteil-Verbindungsabschnittes zugleich die genannte Einsenkung ergibt.

Weitere Merkmale der Erfindung sind nachstehend, auch in der Figurenbeschreibung und der Zeichnung, oftmals in ihrer bevorzugten Zuordnung zu den bereits vorstehend erläuterten Ansprüchen beschrieben bzw. dargestellt, sie können aber auch in einer Zuordnung zu nur einem oder mehreren einzelnen Merkmalen, die beschrieben oder zeichnerisch dargestellt sind, oder unabhängig oder in einem anderen Gesamtkonzept von Bedeutung sein.

Verfahrensmäßig weiter bevorzugt ist, dass zunächst die Einsenkung in dem Flachteil-Verbindungsabschnitt vorgenommen wird, sodann der Kabelschuh einer Oberflächenbehandlung wie insbesondere einer korrosionsschützenden Behandlung, wie etwa einer Verchromung oder Verzinnung, unterworfen wird, und erst danach die Mutter aufgesetzt und die Aufweitung des Halterungsabschnittes vorgenommen wird. Hierdurch lässt sich günstig trotz eines an dem Kabelschuh noch vorgenommenen Umformvorganges, zur Ausbildung des Halterungs-Materialabschnittes, ein hinsichtlich der Oberfläche noch einem weiteren Verfahrensgang unterworfener Kabelschuh, insbesondere ein korrosionsgeschützter Kabelschuh, erreichen. Nach Aufbringung des beispielsweise Korrosionsschutzes ist keine umformende Einwirkung an dem Kabelschuh mehr erforderlich. Die besonders behandelte Oberfläche des Kabelschuhs kann nicht durch einen zur Halterung der Mutter an dem Kabelschuh vorzusehenden Umformvorgang beeinträchtigt werden.

Die Ausbildung der Einsenkung auf dem Flachteil-Verbindungsabschnitt des Kabelschuhs kann von derselben Seite des Kabelschuhs vorgenommen werden, von welcher auch eine eventuell vorrangegangene Umformung, insbesondere zur Ausbildung des Flachteil-Verbindungsabschnitts an einem rohrförmigen Ausgangsteil, vorgenommen wird. Dies erleichtert die genannte Bearbeitung etwa auf einem Drehteller oder in einer sonstigen schrittweise vorgenommenen Umform-Fertigung.

Die Aufweitung des Halterungsabschnittes wird vielfach, schon in Anbetracht der möglichen dazwischen noch vorgenommenen Oberflächenbehandlung wie insbesondere einer Korrosionsschutzbehandlung des Kabelschuhs, wie erläutert, in einem gesonderten Fertigungsgang vorgenommen. Hierbei erfolgt die Einwirkung auf den Flachteil-Verbindungsabschnitt gegenüberliegend zu der Oberseite des Flachteil-Verbindungsabschnittes, welcher der Sitzfläche der Schraube zugeordnet ist. Die Aufweitung kann vorteilhaft mit einem beispielsweise konischen Dorn vorgenommen werden. Die der genannten Oberseite gegenüberliegende Seite des Flachteil-Verbindungsabschnittes kann hierbei günstig als Anschlag für eine Einführtiefe des Dornes genutzt werden.

Bevorzugt erfolgt die Aufweitung des Halterungsabschnittes nur so weit, dass der gewünschte Formschluss zwischen der Mutter und dem Kabelschuh erreicht ist. Im Übrigen soll aber ein axiales Spiel verbleiben, welches die gewünschte Drehbarkeit der an dem Kabelschuh formschlussgehalterten Mutter unterstützt.

Jedenfalls nach dem erfolgten Aufweiten des Halterungsabschnittes ist bevorzugt, dass der Halterungsabschnitt sich nur innerhalb einer Dicke des Halterungs-Verbindungsabschnittes erstreckt. Das Aufliegen des Halterungs-Verbindungsabschnittes mit der der Oberseite gegenüberliegenden Seite auf einer Auflage im letztlichen Verbindungszustand ist damit nicht beeinträchtigt.

Die Durchgangsöffnung selbst kann als Durchgangsbohrung ausgebildet sein. Sie kann herstellungsmäßig beispielsweise durch Ausstanzen erzeugt sein. Die Ausstanzung kann bevorzugt im Sinne der weiter vorne angesprochenen integriert ausführbaren Arbeitsschritte zugleich mit der Ausbildung der Einsenkung vorgenommen werden. Sie kann aber auch als gesonderter Schritt im Zuge des Herstellungsverfahrens vorgenommen werden.

Die Einsenkung kann insbesondere dann, wenn sie in einem gesonderten Arbeitsschritt und entsprechend nicht mit einer Ausformung auf der Sitzseite der Mutter vorgenommen wird, in einem Querschnitt durch den Flachteil-Verbindungsabschnitt, in welchem sich eine geometrische Mittelachse der Durchgangsöffnung als Linie abbildet, auf derselben Seite der Durchgangsöffnung beidseitig von einem Teilbereich der Oberseite überragt sein. Hierdurch kann sich beidseitig der Einsenkung in den genannten Querschnitt ein Auflageabschnitt der Oberseite ergeben, auf welchem die Sitzfläche der Mutter im Benutzungszustand aufliegt. Bei einer schraubverbundenen, angezogenen Mutter kann sich hierdurch eine vergleichsweise höhere Flächenpressung ergeben als bei einer Mutter, die mit ihrer Sitzfläche vollständig auf der Oberseite des Flachteil-Verbindungsabschnittes aufsitzt. Bevorzugt ist jedenfalls, dass die Einsenkung sich innerhalb einer Fläche befindet, welche durch eine Projektion der Sitzfläche der Mutter in Richtung der geometrischen Mittelachse auf die Oberseite des Flachteil-Verbindungsabschnittes gegeben ist. Diese Projektion bezieht sich auf eine konzentrische Ausrichtung der Mutter und der Durchgangsöffnung. Die Sitzfläche der Mutter ist in der betrachteten Querschnittsdarstellung bevorzugt geradlinig durchgehend, unterbrochen durch die das Innengewinde aufweisende Schrauböffnung der Mutter, ausgebildet.

Die Einsenkung kann zunächst nur an einer, mehreren oder einer Vielzahl von diskreten Stellen des Umfangs vorgenommen sein. Etwa durch eine körnerartige Einsenkung. Bevorzugt ist die Einsenkung als umlaufende Rille ausgebildet, die weiter bevorzugt konzentrisch zu der Mittelachse der Durchgangsöffnung umläuft.

### Kurze Beschreibung der Zeichnungen

Nachstehend ist die Erfindung anhand der beigefügten Zeichnung, die jedoch lediglich Ausführungsbeispiele darstellt, erläutert. Hierbei zeigt:
- Fig. 1: eine mit einem Kabelschuh verbundene Mutter in einer ersten Ausführungsform;
- Fig. 2: eine Vergrößerung des Bereiches II-II in Fig. 1;
- Fig. 3: eine weitere Ausführungsform in einer Darstellung gemäß Fig. 1, mit einem aus Vollmaterial gebildeten Kabelschuh;
- Fig. 4: ein weiteres Beispiel gemäß Fig. 1 bzw. Fig. 3, mit einer eine Einsenk-Ausformung an der Sitzfläche aufweisenden Mutter;
- Fig. 5: eine Herausvergrößerung des Bereichs V-V in Fig. 4; und
- Fig. 6: eine beispielhafte Darstellung einer Herstellung des mit einer Mutter verbundenen Kabelschuhs gemäß Fig. 1.

### Beschreibung der Ausführungsformen

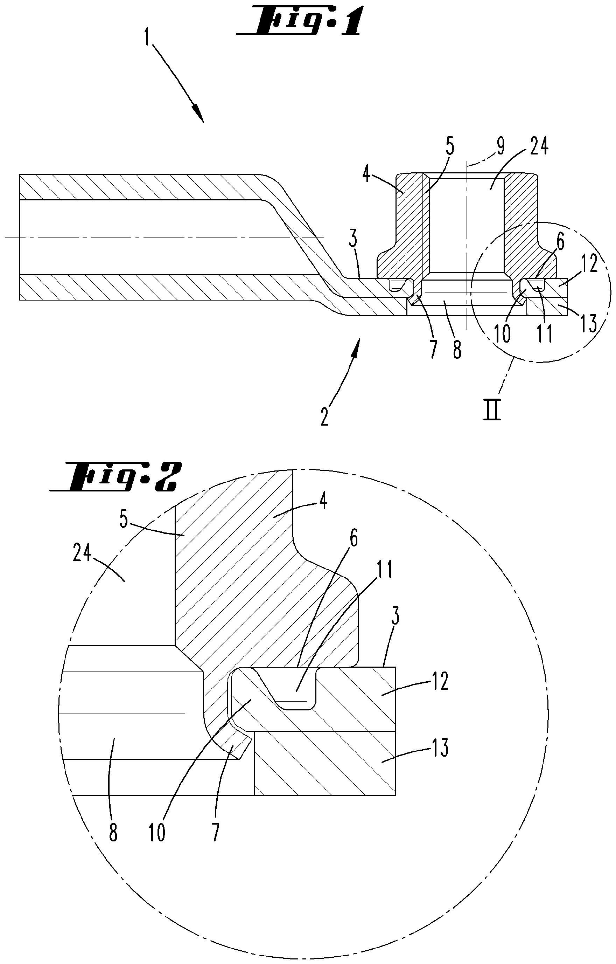

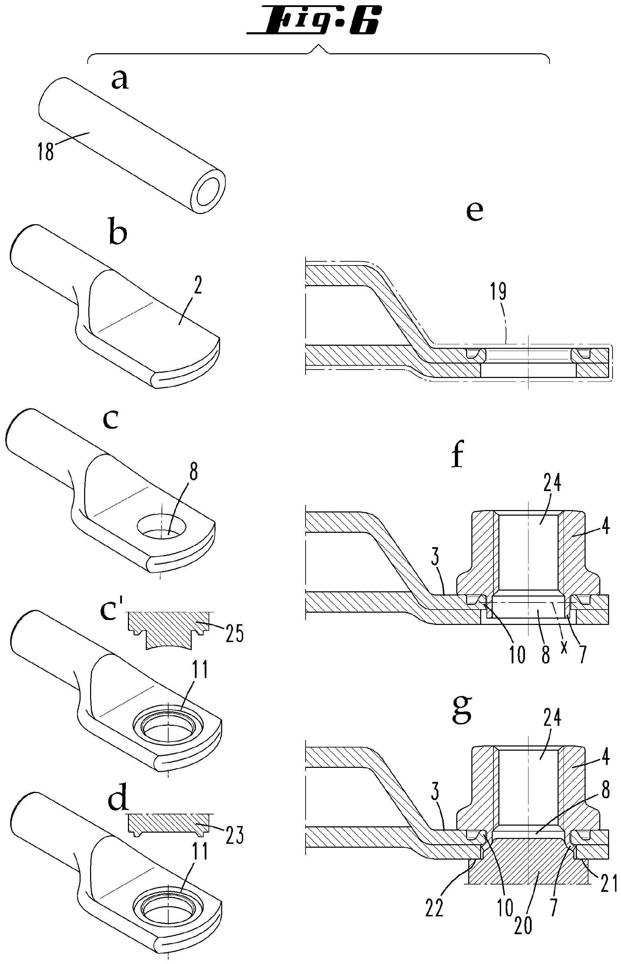

Dargestellt und beschrieben ist, zunächst mit Bezug zu den Figuren 1 und 2, ein Kabelschuh 1, der einen Flachteil-Verbindungsabschnitt 2 aufweist. Auf einer Oberseite 3 des Flachteil-Verbindungsabschnittes 2 sitzt eine Mutter 4 auf. Die Mutter 4 weist in üblicher Weise eine Schrauböffnung 24 mit einem Innengewinde 5 auf. Die Mutter 4 sitzt mittels einer Sitzfläche 6 auf der Oberseite 3 auf. Weiter nach unten von der Sitzfläche 6 erstreckt sich ein Halterungsabschnitt 7, der im Ausgangszustand, wie etwa aus Fig. 6, f ersichtlich, zylinderförmig gebildet sein kann. Der Halterungsabschnitt 6 ist bevorzugt einteilig, integral materialeinheitlich, mit der Mutter 4 ausgebildet.

Der Flachteil-Verbindungsabschnitt 2 weist weiter eine Durchgangsöffnung 8 auf, die eine geometrische Mittelachse 9 besitzt.

Wie sich insbesondere aus Fig. 2 ergibt, ist weiter an dem Flachteil-Verbindungsabschnitt 2 ein in die Durchgangsöffnung 8 vorragender Halterungs-Materialabschnitt 10 ausgeformt, welchen der durch plastische Verformung zugeordnet seinem freien Ende aufgeweitete Halterungsabschnitt 7 formschlüssig umfasst.

Ausgehend von der Oberseite 3 ist weiter in dem Flachteil-Verbindungsabschnitt 2 eine Einsenkung 11 ausgebildet. Diese Einsenkung 11 hat zur Ausformung des Halterungs-Materialabschnittes 10 geführt.

Bezüglich der Ausführungsform der Figuren 1 und 2, wie auch bezüglich aller weiteren hier beschriebenen Ausführungsformen, ist somit ein Kabelschuh 1 gegeben, an welchem die Mutter formschlüssig aber frei drehbar gehaltert ist. Bezüglich des Halterungs-Materialabschnittes 10 und des diesen im Querschnitt umfassenden Halterungsabschnittes 7 verbleibt bevorzugt ein gewisses axiales Spiel, das die freie Drehbarkeit vorteilhaft ermöglicht.

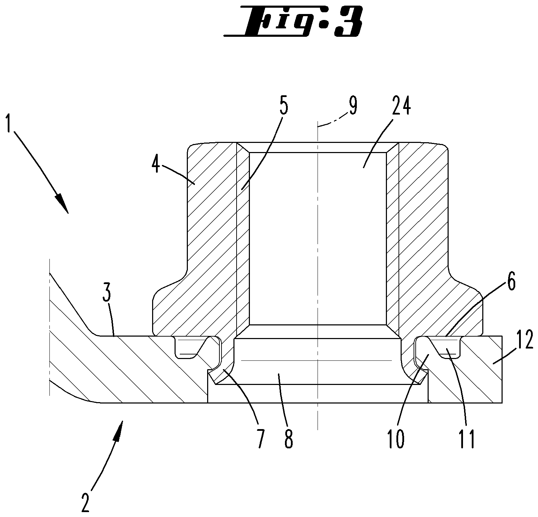

Die Ausführungsform der Fig. 3 entspricht der Ausführungsform der Figuren 1 und 2. Gleiche Bezugszeichen beschreiben entsprechend gleiche Teile und Bereiche.

Der Unterschied ist allein darin gegeben, dass der Flachteil-Verbindungsabschnitt 2 aus einem Vollmaterial besteht. Es sind keine im Querschnitt sich als zwei Lagen 12, 13 ergebenden Faltabschnitte ausgebildet.

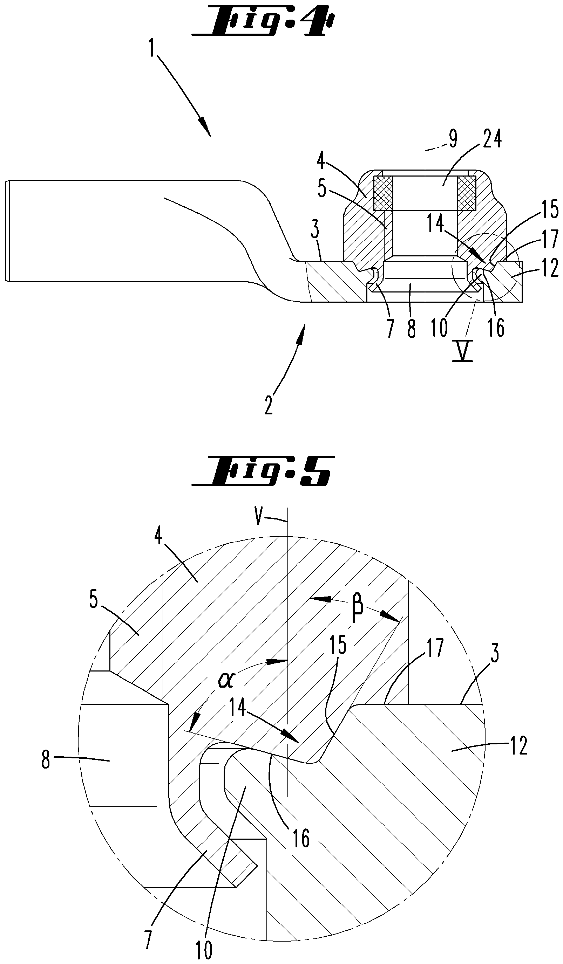

Bei der Ausführungsform der Figuren 4 und 5 ist eine Mutter 4 vorgesehen, die hinsichtlich ihrer Sitzfläche 6 sogleich mit einem Einsenk-Vorsprung 14 ausgebildet ist.

Dieser Einsenk-Vorsprung 14 kann im Einzelnen aus einer Vertikalfläche 15 bestehen, die bevorzugt mit der Vertikalen einen spitzen Winkel β einschließt. Weiter kann eine Begrenzungsfläche 16 ausgebildet sein, die ebenfalls mit einer Vertikalen V einen spitzen Winkel α einschließt. Die Ausgestaltung kann auch dahingehend beschrieben werden, dass beide Flächen mit einer Horizontalen, die nicht weiter dargestellt ist, einen spitzen Winkel einschließen.

Der spitze Winkel α bzw. β ist bevorzugt im Bereich von 1 - 60° ausgebildet. Weiter bevorzugt bezüglich α zwischen 10° und 30° und bezüglich β zwischen 20° und 50°. Bei Ausführungsbeispiel beträgt der Winkel α 15° und der Winkel β 30°.

Die Vertikalfläche 15 geht radial außen in eine Horizontalfläche 17 über, die bei einer Sechskantausformung der Mutter über den Umfang gegebenenfalls eine unterschiedliche radiale Erstreckung ausbilden kann.

Die beschriebenen Flächen 15 bis 17 bilden insgesamt bei dieser Ausführungsform die Sitzfläche der Mutter 4. Radial nach innen erstreckt sich die Sitzfläche bei konzentrischer Ausrichtung zwischen der Mutter 4 und der Durchgangsöffnung 8 bis in eine Überdeckung zu dem Rand der Durchgangsöffnung 8 bezogen auf den durch einen Umformvorgang unbeeinflussten Rand.

Zufolge der beschriebenen gewinkelten Ausbildung der Begrenzungsfläche 16 und der Vertikalfläche 15 kann sich bei einem entsprechenden Einpressen der Mutter 4 in die Oberseite 3 des Flachteil-Verbindungsabschnittes 2 eine elastische Rückformung durch das Material des Flachteil-Verbindungsabschnittes 2 ergeben, die zu einem leichten Anheben jedenfalls der Horizontalfläche 17 über die Oberseite 3 des Flachteil-Verbindungsabschnittes 2 führt. Hierdurch lässt sich auch günstig die gewünschte leichte Drehbarkeit beeinflussen.

Gegenüber der Ausführungsform der Figuren 1 - 3 ist bei dem Beispiel der Figuren 4 und 5 der Halterungs-Materialabschnitt 10 in der Regel weiter nach unten in der Durchgangsöffnung 8 des Flachteil-Verbindungsabschnittes 2 versetzt.

Mit Bezug zu Fig. 6 ist die Herstellung einer an dem Flachteil-Verbindungsabschnitt eines Kabelschuhs drehverbundenen Mutter in weiterer Einzelheit beispielhaft erläutert.

Hinsichtlich des Kabelschuhs 1 kann als Ausgangsprodukt ein Rohrabschnitt 18 vorliegen. Der Rohrabschnitt 18 wird einseitig flachgedrückt, siehe Fig. 6b zur Ausbildung des Flachteil-Verbindungsabschnittes 2.

In einem nächsten Schritt, Fig. 6c, kann die Durchgangsöffnung 8 ausgebildet werden. Beispielsweise durch einen Stanzvorgang. Alternativ, hier in Fig. 6c' dargestellt, kann zugleich mit der Ausbildung, bevorzugt einer Stanzausbildung, der Durchgangsöffnung 8 die Einsenkung 11 ausbildet werden. Beispielhaft ist hier ein kombiniertes Einsenkungs- und Stanzwerkzeug 25, das zu diesem Zweck Verwendung finden kann, dargestellt. In diesem Fall werden die Arbeitsschritte der Ausbildung der Durchgangsöffnung 8 und der Ausbildung der Einsenkung 11 integriert miteinander durchgeführt.

In einem gegebenenfalls weiteren Verfahrensschritt, Fig. 6d, wenn die Ausbildung der Durchgangsöffnung 8 nicht integriert mit der Ausbildung der Einsenkung 11 durchgeführt wird, wird die Einsenkung 11 ausgebildet, die bei dem in Fig. 6 dargestellten Ausführungsbeispiel aus einer umlaufenden Nut besteht. Weiterhin ist ein zur Ausbildung der Einsenkung 11 gegebenenfalls nutzbares Stempelwerkzeug 23 dargestellt.

In einem weiteren Verfahrensschritt, der in Fig. 6e angedeutet ist, kann der so vorbereitete Kabelschuh einer Oberflächenbehandlung unterworfen werden, beispielsweise zur Aufbringung einer Oberflächenbeschichtung, insbesondere beispielsweise einer Korrosionsschutzbeschichtung 19.

In dem dann folgenden Verfahrensschritt, siehe Fig. 6f, wird die Mutter 4 auf die Oberseite 3 des soweit ausgebildeten Kabelschuhs aufgesetzt. Der Halterungsabschnitt 7 ist hierbei noch unverformt und ragt nach unten in der Durchgangsöffnung 8 über einen engsten Querschnitt x des Halterungs-Materialabschnittes 10 hinaus.

In einem darauffolgenden Verfahrensschritt, siehe Fig. 6g, wird der Halterungsabschnitt 7 mittels eines Dornes 20 aufgeweitet. Der Dorn 20 kann hierbei mit einer flach ausgebildeten Oberseite 21 als Vorschubbegrenzung mit der zugeordneten Unterseite 22 des Flachteil-Verbindungsabschnittes 2 in Anlage kommen.

**Liste der Bezugszeichen**

| | | | |
|---|---|---|---|
| 1 | Kabelschuh | α | Winkel |
| 2 | Flachteil-Verbindungsabschnitt | β | Winkel |
| | | V | Vertikale |
| 3 | Oberseite | x | Querschnitt |
| 4 | Mutter | | |
| 5 | Innengewinde | | |
| 6 | Sitzfläche | | |
| 7 | Halterungsabschnitt | | |
| 8 | Durchgangsöffnung | | |
| 9 | Mittelachse | | |
| 10 | Halterungs-Materialabschnitt | | |
| 11 | Einsenkung | | |
| 12 | Lage | | |
| 13 | Lage | | |
| 14 | Einsenk-Vorsprung | | |
| 15 | Vertikalfläche | | |
| 16 | Begrenzungsfläche | | |
| 17 | Horizontalfläche | | |
| 18 | Rohrabschnitt | | |
| 19 | Korrosionsschutzbeschichtung | | |
| 20 | Dorn | | |
| 21 | Oberseite | | |
| 22 | Unterseite | | |
| 23 | Stempelwerkzeug | | |
| 24 | Schrauböffnung | | |
| 25 | kombiniertes Einsenkungs- und Stanzwerkzeug | | |

## Patentansprüche

1. Verfahren zur Herstellung einer mit einem Flachteil-Verbindungsabschnitt (2) eines Kabelschuhs (1) frei drehbar verbundenen Mutter (4), wobei der Flachteil-Verbindungsabschnitt (2) eine Durchgangsöffnung (8) aufweist, die Mutter (4) eine im Verbindungszustand untere Sitzfläche (6) aufweist und sich an der Mutter (4) von der Sitzfläche (6) weiter nach unten ein Halterungsabschnitt (7) erstreckt, wobei eine Verjüngung der Durchgangsöffnung (8) durch einen in die Durchgangsöffnung (8) durch Umformung vorgewölbten Halterungs-Materialabschnitt (10) ausgebildet wird und der Halterungs-Materialabschnitt (10) durch eine in dem Flachteil-Verbindungsabschnitt (2) umgebend zu der Durchgangsöffnung (8) auf einer der Sitzfläche (6) zugeordneten Oberseite (3) des Flachteil-Verbindungsabschnittes (2) vorgenommene Einsenkung (11) erzeugt wird, **dadurch gekennzeichnet, dass** zunächst der Halterungs-Materialabschnitt (10) ausgebildet und die Mutter (4) auf die Oberseite (3) aufgesetzt wird, wobei der Halterungsabschnitt (7) einen durch den Halterungs-Materialabschnitt (10) gebildeten engsten Querschnitt (x) der Durchgangsöffnung (8) nach unten überragt, und dass sodann der Halterungsabschnitt (7) unterhalb des engsten Querschnitts (x) aufgeweitet wird, zur frei drehbaren Formschluss-Halterung der Mutter (4) an dem Kabelschuh (1).

2. Verfahren nach Anspruch 1, **dadurch gekennzeichnet, dass** der Kabelschuh (1) vor einem Aufsetzen der Mutter (4) auf die Oberseite (3) einer Oberflächenbehandlung unterzogen wird.

3. An einem Flachteil-Verbindungsabschnitt (2) eines Kabelschuhs (1) frei drehbar angebrachte Mutter (4), wobei der Flachteil-Verbindungsabschnitt (2) eine Durchgangsöffnung (8) aufweist, die Mutter (4) eine im Verbindungszustand untere Sitzfläche (6) aufweist und sich von der Sitzfläche (6) weiter nach unten ein Halterungsabschnitt (7) erstreckt, wobei in dem Flachteil-Verbindungsabschnitt (2) umgebend zu der Durchgangsöffnung (8) auf einer der Sitzfläche (6) der Mutter (4) zugeordneten Oberseite (3) eine Einsenkung (11) ausgebildet ist und eine Verjüngung der Durchgangsöffnung (8) durch einen in die Durchgangsöffnung (8) vorgewölbten Halterungs-Materialabschnitt (10) gegeben ist, wobei der Halterungsabschnitt (7) einen durch den Halterungs-Materialabschnitt (10) gebildeten engsten Querschnitt (x) der Durchgangsöffnung (8) nach unten überragt, **dadurch gekennzeichnet, dass** der Halterungsabschnitt (7) unterhalb des engsten Querschnitts (x) durch plastische Verformung aufgeweitet ist, zur frei drehbaren Formschluss-Halterung der Mutter (4) an dem Kabelschuh (1).

4. Mit einem Kabelschuh drehbar verbundene Mutter (4) nach Anspruch 3, **dadurch gekennzeichnet, dass** die Einsenkung (11) in einem Querschnitt durch den Flachteil-Verbindungsabschnitt (2), in welchem eine geometrische Mittelachse der Durchgangsöffnung (8) als Linie wiederzugeben ist, auf derselben Seite der Durchgangsöffnung (8) beidseitig von einem Teilbereich der Oberseite (3) überragt ist.

5. Mit einem Kabelschuh drehbar verbundene Mutter (4) nach einem der Ansprüche 3 oder 4, **dadurch gekennzeichnet, dass** die Einsenkung (11) als umlaufende Rille ausgebildet ist.

## Claims

1. A method for producing a nut (4) that is connected to a flat part connecting section (2) of a cable shoe (1) in a freely rotatable manner, wherein the flat part connecting section (2) has a passage opening (8), the nut (4) has a seating face (6), which is at the bottom in the connected state, and a holder section (7) extends further downward from the seating face (6) on the nut (4), wherein a tapered portion of the passage opening (8) is formed by a holder material section (10), which is pre-curved into the passage opening (8) by deformation, and wherein the holder material section (10) is formed by a recess (11), which is produced in the flat part connecting section (2) so as to surround the passage opening (8) on a top side (3) of the flat part connecting section (2) that is associated with the seating face (6), **characterized in that** the holder material section (10) is initially formed and the nut (4) is attached to the top side (3), wherein the holder section (7) protrudes downward beyond a narrowest cross section (x) of the passage opening (8), which is formed by the holder material section (10), and that the holder section (7) is subsequently widened underneath the narrowest cross section (x) in order to hold the nut (4) on the cable shoe (1) in a freely rotatable and interlocking manner.

2. The method according to claim 1, **characterized in that** the cable shoe (1) is subjected to a surface treatment before the nut (4) is attached to the top side (3).

3. A nut (4) that is attached to a flat part connecting section (2) of a cable shoe (1) in a freely rotatable manner, wherein the flat part connecting section (2) has a passage opening (8), the nut (4) has a seating face (6), which is at the bottom in the connected state, and a holder section (7) extends further downward from the seating face (6), wherein a recess (11) is produced in the flat part connecting section (2) so as to surround the passage opening (8) on a top side (3) that is associated with the seating face (6) of the nut (4), wherein a tapered portion of the passage opening (8) is formed by a holder material section (10), which is pre-curved into the passage opening (8), and wherein the holder section (7) protrudes downward beyond a narrowest cross section (x) of the passage opening (8) that is formed by the holder material section (10), **characterized in that** the holder section (7) is widened underneath the narrowest cross section (x) by plastic deformation in order to hold the nut (4) on the cable shoe (1) in a freely rotatable and interlocking manner.

4. The nut (4) that is rotatably connected to a cable shoe according to claim 3, **characterized in that** a partial region of the top side (3) on both sides protrudes beyond the recess (11) on the same side of the passage opening (8) in a cross section through the flat part connecting section (2), in which a geometric center axis of the passage opening (8) forms a line.

5. The nut (4) that is rotatably connected to a cable shoe according to one of claims 3 or 4, **characterized in that** the recess (11) is realized in the form of a circumferential groove.

## Revendications

1. Procédé de fabrication d'un écrou (4) relié à une section de raccordement plate (2) d'une cosse de câble (1) de manière à pouvoir tourner librement, dans lequel la section de raccordement plate (2) présente un trou traversant(8), l'écrou (4) comprend à l'état raccordé une surface d'appui inférieure (6) et une section de maintien (7) adjointe à l'écrou (4) s'étend plus loin vers le bas à partir de la surface d'appui (6), dans lequel un rétrécissement du trou traversant (8) est formé par une section de matériau de maintien (10) s'avançant par déformation dans le trou traversant (8) et la section de matériau de maintien (10) est produite par un renfoncement (11) réalisé dans la section de raccordement plate (2) entourant le trou traversant (8) sur une face supérieure de la section de raccordement plate (2) qui est associée à la surface d'appui (6), **caractérisé en ce que** d'abord la section de matériau de maintien (10) est formée et l'écrou (4) est placé sur la face supérieure (3), dans lequel la section de maintien (7) dépasse vers le bas d'une section transversale la plus étroite (x) du trou traversant(8) formée par la section de matériau de maintien (10), et **en ce que** la section de maintien (7) est ensuite élargie en dessous de la section transversale la plus étroite (x) pour un maintien libre en rotation de l'écrou (4) à la cosse de câble (1) par complémentarité de forme.

2. Procédé selon la revendication 1, **caractérisé en ce que** la cosse de câble (1) est soumise à un traitement de surface avant que l'écrou (4) ne soit placé sur la face supérieure (3).

3. Ecrou (4) monté à une section de raccordement plate (2) d'une cosse de câble (1) de manière à pouvoir tourner librement, dans lequel la section de raccordement plate (2) a un trou traversant(8), l'écrou (4) comprend à l'état raccordé une surface d'appui inférieure (6) et une section de maintien (7) s'étend plus loin vers le bas à partir de la surface d'appui (6), dans lequel un renfoncement (11) est formé dans la section de raccordement plate (2) entourant le trou traversant (8) sur une face supérieure (3) associée à la surface d'appui (6) de l'écrou (4) et un rétrécissement du trou traversant(8) est donné par une section de matériau de maintien (10) s'avançant dans le trou traversant(8), dans lequel la section de maintien (7) dépasse vers le bas d'une section transversale la plus étroite (x) du trou traversant(8) formée par la section de matériau de maintien (10), **caractérisé en ce que** la section de maintien (7) est élargie en dessous de la section transversale la plus étroite (x) par déformation plastique pour un maintien libre en rotation de l'écrou (4) à la cosse de câble par complémentarité de forme.

4. Ecrou (4) relié à rotation à une cosse de câble selon la revendication 3, **caractérisé en ce que** dans une section transversale à travers la section de raccordement plate (2) dans laquelle un axe central géométrique du trou traversant (8) se représente comme une ligne, le renfoncement (11) est surplombé des deux côtés par une zone partielle de la face supérieure (3) du même côté du trou traversant (8).

5. Ecrou (4) relié à rotation à une cosse de câble selon l'une des revendications 3 ou 4, **caractérisé en ce que** le renfoncement (11) est réalisé sous la forme d'une rainure périphérique.
